## Europäisches Patentamt
## European Patent Office
## Office européen des brevets

(19)

(11) Veröffentlichungsnummer: **0 065 249**
**B1**

(12) # EUROPÄISCHE PATENTSCHRIFT

(45) Veröffentlichungstag der Patentschrift:
05.02.86

(51) Int. Cl.⁴: **B 65 G 65/28**

(21) Anmeldenummer: 82104027.6

(22) Anmeldetag: 13.11.79

(60) Veröffentlichungsnummer der früheren Anmeldung
nach Art. 76 EPÜ: 0012227

(54) **Verfahren zum Aufhalden von Schüttgütern, insbesondere von Halden- oder Waschbergen.**

(30) Priorität: 31.10.79 DE 2943943
09.12.78 DE 2853282
09.12.78 DE 2853229

(43) Veröffentlichungstag der Anmeldung:
24.11.82 Patentblatt 82/47

(45) Bekanntmachung des Hinweises auf die Patenterteilung:
05.02.86 Patentblatt 86/6

(84) Benannte Vertragsstaaten:
AT BE CH FR GB IT LU NL SE

(56) Entgegenhaltungen:
DE - A - 2 842 442
US - A - 1 705 901
US - A - 3 953 170

PROSPEKTBLATT "GMEINERS SCHOTTERFIX" der
Firma W. Gmeiner in Amberg/Opf

(73) Patentinhaber: **Rothalit, Bau- und Wegebaustoffe
GmbH, Langekampstrasse 36, D-4690 Herne 2 (DE)**

(72) Erfinder: **Nolte, Hans, Fahrendelle 19,
D-5810 Witten-Heven (DE)**

(74) Vertreter: **Herrmann-Trentepohl, Werner, Dipl.-Ing.,
Schaeferstrasse 18, D-4690 Herne 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Aufhalden von Schüttgütern, vorzugsweise von Halden- oder Waschbergen, mit Hilfe eines Schüttguttransportfahrzeuges, dessen Aufbau aus einem oben offenen Kasten besteht, der eine als schwenkbare Klappe ausgebildete, hintere Abschlußwand und einen in Längsrichtung des Kastens laufenden Schubschild mit einem Antrieb aufweist, der sich in einem mit dem Kasten an der Schubschildseite angebrachten Rahmen abstützt, wobei das antransportierte Schüttgut beim Entladen des Fahrzeuges abgelagert wird, und das Schüttgut hinter dem fahrenden Schüttguttransportfahrzeug durch Abstimmung der Fahrgeschwindigkeit auf die Entladungsgeschwndigkeit des Schubschildes in bestimmter Lage auf die Oberseite der Halde aufgetragen wird.

Die Erfindung geht aus von einem vorbekannten Verfahren, bei dem das Schüttgut durch Verkippen entladen und hierbei vorzugsweise zunächst eine Böschung gebildet wird. Dabei ergeben sich Unebenheiten auf der Haldenoberfläche, welche mit einer Planierraupe ausgeglichen werden müssen. Nachteilig ist hieran zunächst, daß sich bei diesem Verfahren keine, jedenfalls aber eine unzureichende Verdichtung des Schüttgutes auf der Halde ergibt. Deswegen ist die Aufnahmefähigkeit der nach einem solchen Verfahren hergestellten Hälden unzureichend.

Das vorbekannte Verfahren muß sich in der Regel auch solcher Fahrzeuge bedienen, die nicht nur auf Baustellen und Halden, sondern auch für den Verkehr auf öffentlichen Straßen zugelassen sind, auf denen sie das in der Regel schlammige Schüttgut zur Halde transportieren. Diese Fahrzeuge sind daher in der Regel als Hinterbzw. als Seitenkipper ausgebildet. Auf der Halde bietet die unzureichend verdichtete Schüttgutfläche diesen Fahrzeugen eine unsichere Standfläche. Beim Entladen wandert außerdem der Schwerpunkt der Last weit nach oben. Dadurch stürzen die Fahrzeuge auf der Halde häufig um. Diese Verhältnisse führen insgesamt zu scharfen Auflagen der zuständigen Behörden, welche insbesondere die Sicherheit und die Sauberhaltung der Straßen betreffen.

Aus der Beschotterung von Straßen ist ein Schüttgut- transportfahrzeug bekannt, dessen Aufbau aus einem oben offenen Kasten besteht, der eine als schwenkbare Klappe ausgebildete hintere Abschlußwand aufweist und als Hinterkipper ausgebildet ist. An der schwenkbaren Klappe befindet sich eine Dosiervorrichtung, welche bei nach hinten geschwenktem Kasten den Auslauf des Schüttgutes aus dem Kasten reguliert. Bei einem derartigen Fahrzeug wird die Gefahr des Umstürzens des Fahrzeuges auf der Halde nicht ausgeschaltet, weil auch hierbei während des Entladens der Schwerpunkt der Last weit nach oben auswandert (US-A-1 705 901).

Ferner ist ein Schüttguttransportfahrzeug mit den von der Erfindung als bekannt vorausgesetzten Merkmalen bekannt (US-A-3 953 170). Solche Schüttguttransportfahrzeuge haben den Vorteil, daß beim Entladen der Schwerpunkt der Last vertikal nicht verändert wird und daß deswegen die Fahrzeuge beim Entladen weniger gefährdet sind. Außerdem hängt bei derartigen Fahrzeugen die Entladegeschwindigkeit von der Geschwindigkeit des Schubschildes und deswegen nicht mehr von den Eigenschaften des Schüttgutes ab. Solche Schüttguttransportfahrzeuge wurden aber bislang zum Aufhalden von Schüttgütern entweder nicht eingesetzt oder nur zur Ausführung des vorbekannten Verfahrens benutzt, das eingangs erklärt ist.

Der Erfindung liegt die Aufgabe zugrunde, das ein- gangs als bekannt vorausgesetzte Verfahren auf einfache Weise so zu führen, daß sich die Aufnahmefähigkeit der betreffenden Halde vergrößert und nicht befahrbare Unebenheiten auf der Haldenoberfläche vermieden werden.

Gemäß der Erfindung wird diese Aufgabe dadurch gelöst, daß das Schüttgut in dünner Lage von 10 bis 20 cm aufgetragen und die so geschaffene Schüttgutfläche durch Befahren ohne Einsatz von Planierraupen verdichtet wird.

Nach dem erfindungsgemäßen Verfahren wird die Dicke der Schüttgutlage mit der Entlade- und Fahrgeschwindigkeit des Fahrzeuges bestimmt. Dabei kann die Schüttgutlage in einer Stärke von 10 bis 20 cm aufgetragen werden. Diese Dicke ermöglicht den Verzicht auf den Einsatz von Planierraupen. Andererseits ist die Schüttgutlage so tragfähig, daß sie sofort befahren werden kann. Darauf beruht die erfindungsgemäß geschaffene Möglichkeit, das Schüttgut optimal zu verdichten und dadurch die Aufnahmefähigkeit der betreffenden Halde entsprechend zu steigern.

Im folgenden wird die Erfindung anhand eines Aus- führungsbeispieles näher erläutert, welches das in dem erfindungsgemäßen Verfahren verwendete Fahrzeug betrifft; in den Zeichnungen zeigen

Figur 1 in Seitenansicht unter Fortlassung aller für das Verständnis der Erfindung nicht erforderlichen Einzelheiten einen Auflieger gemäß der Erfindung,

Figur 2 eine Draufsicht auf den Gegenstand der Figur 2, wobei ausschließlich der Aufliegerteil gezeichnet ist,

Fig. 3 in abgebrochener Darstellung den Aufbau im Quer- schnitt und

Fig. 4 ein hydraulisches Schaltbild.

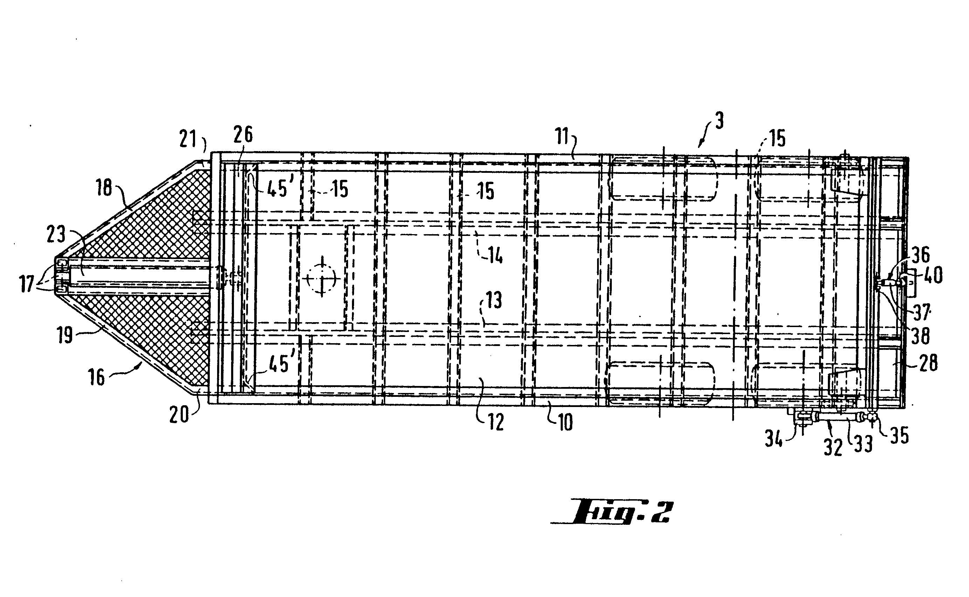

Auf dem Sattel 1 einer dreiachsigen Zugmaschine 2 befindet sich der Auflieger 3 mit einem selbsttragenden Aufbau 4, der an seinem rückwärtigen Ende bei 5 zur Aufnahme einer Doppelachse 6 bzw. 7 mit Einfachbereifung 8 bzw. 9 eingerichtet ist. Es handelt sich um einen Kastenaufbau, der gemäß der Draufsicht nach Fig. 2 parallele Längswände 10 bzw. 11 und einen ebenen Boden 12 auf zwei parallelen Längsträgern 13 bzw. 14 und mehreren Querträgern 15 aufweist. Der Kasten bildet somit einen selbsttragenden Aufbau. An seinem vorderen Ende trägt der Kasten einen allgemein mit 16 bezeichneten Rahmen. Dieser hat eine Traverse 17, konvergierende Seitenteile 18 bzw. 19 und parallele Rahmenglieder 20 bzw. 21, welche mit den konvergierenden Seitenteilen 18 und 19 sowie mit dem Kasten selbst verbunden sind. An der Traverse 17 ist über ein Horizontalgelenk 22 eine Mehrfachzylinderkolbenanordnung 23 angelenkt.

2

**0 065 249**

Das Ende der Kolbenstange 24 der Anordnung 23 sitzt seinerseits über einem Horizontalgelenk 25 in einem Schubschild 26, der die Stirnseite des Kastens bildet, dessen hintere Abschlußwand von einer schwenkbaren Klappe 28 gebildet wird.

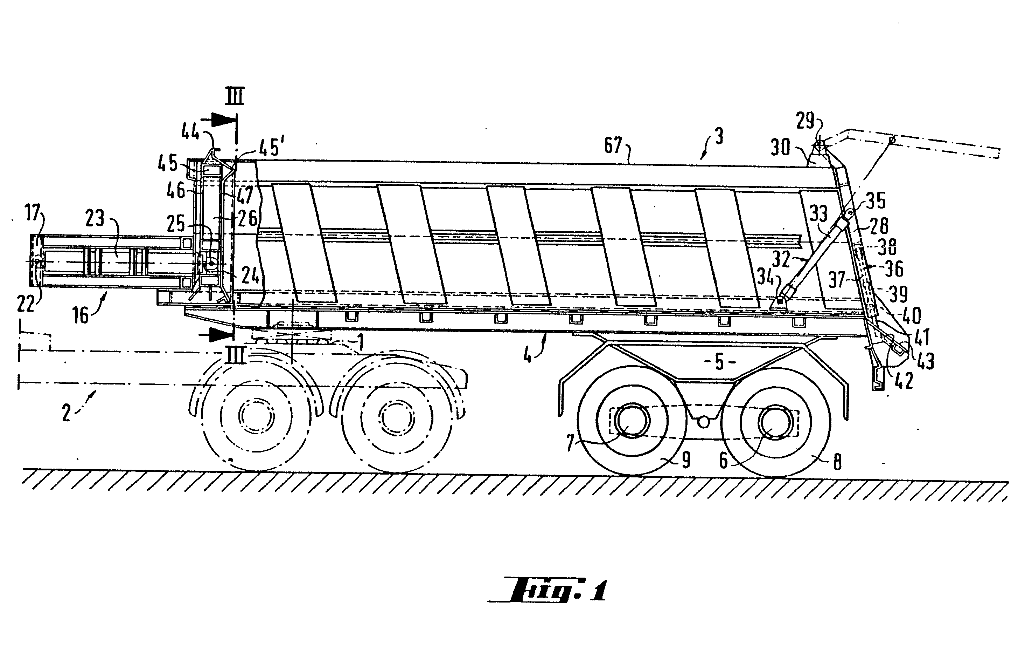

Diese Klappe 28 ist mit ihrer Oberkante in zwei seitlichen Gelenken 29 (Fig. 1) auf der Oberkante des Kastens bei 30 befestigt. Sie läßt sich ebenso wie die Zylinderkolbenanordnung 23 mit einer Zylinderkolbenanordnung 32 aus ihrer in ausgezogenen Linien in Fig. 1 wiedergegebenen geschlossenen Stellung in die geöffnete und strichpunktiert wiedergegebene Stellung verschwenken. Dazu ist der Zylinder 33 an ein Horizontalgelenk 34 angelenkt, während die Kolbenstange über ein Horizontalgelenk 35 an die Klappe 28 angelenkt ist. Außerdem kann die Klappe mit einer weiteren hydraulischen Zylinderkolbenanordnung 36 verriegelt werden. Der Verriegelungszylinder 37 (Fig. 1) ist bei 38 an die Klappe 28 angelenkt, während seine Kolbenstangen 39 bei 40 an einen Verschlußbolzen 41 angelenkt ist, der in einer entsprechenden Ausnehmung 42 einer schräg nach unten gerichteten Fortsetzung 43 des Bodens einrasten kann.

Der Schubschild 26 besteht aus einem aus Hohlprofilen bestehenden rechteckigen Rahmen 45, der auf beiden Seiten mit je einem Blech 46 b zw. 47 belegt ist. Ein oberes Winkelprofil 44 dient als Stauleiste, d.h. als Wehr, das ein Überquellen des Schüttgutes über die Oberkante - (obere Rahmentraverse des Schubschildes 26) verhindert. Es ist mit einem im Querschnitt dreieckförmigen weiteren Profil 45' verbunden, das eine um den Scaubschild 26 rahmenförmig umlaufende Stauleiste bildet, so daß der Schubschild 26 die Ladung an seiner Stirnseite zusammendrücken kann.

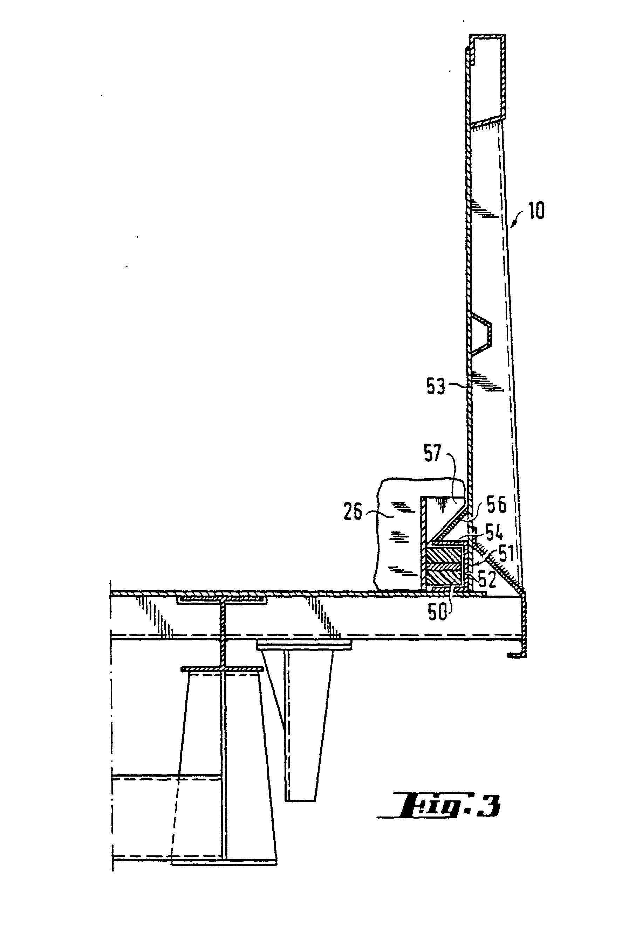

Der Schubschild 26 weist nach Fig. 3 unten an beiden Seiten je einen aus einem reibungsarmen Kunststoff bestehenden Block 50 auf. Der Dlock gleitet in einer Längsführung 51, welche von einem Kastenprofil gebildet wird, dessen Boden 52 mit dem Seitenblech 53 der betreffenden Seitenwand 10 des Aufbaus verbunden ist. Ein von der oberen Seitenwand 54 des Kastenprofils 51von innen schräg nach außen bis zur Seitenwand 10 verlaufendes Leitblech 56 dient zum Abweisen des Schüttgutes und wird von einem entsprechend geformten Blech 57 des Schubschildes 25 abgestrichen.

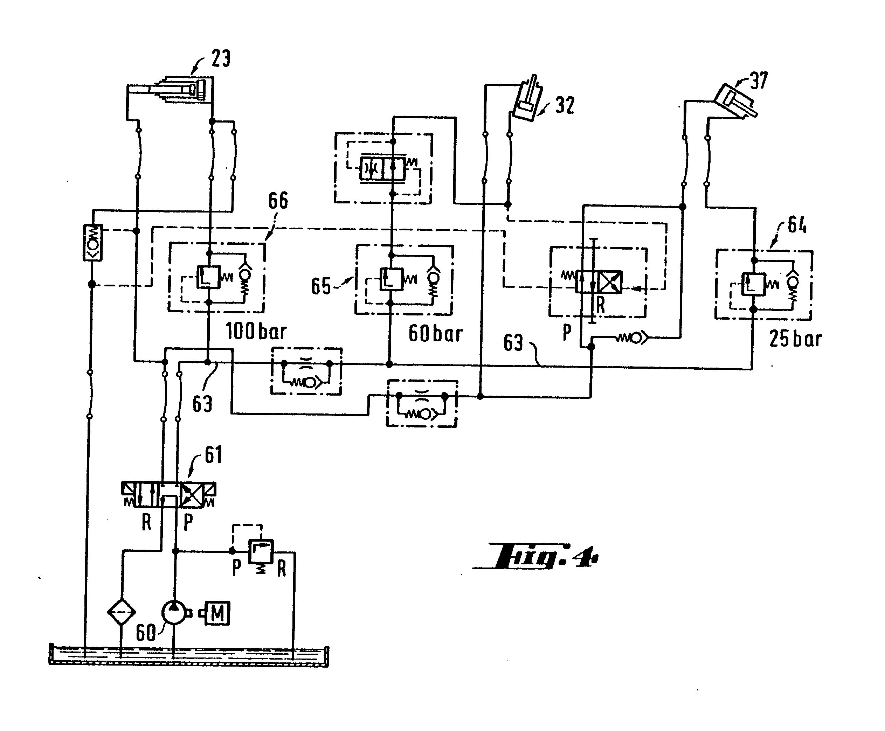

Die in Fig. 4 wiedergegebene Differenzdruckschaltung läßt erkennen, daß die verschiedenen Zylinderkolbenanordnungen so gesteuert werden, daß die Mehrfachzylinder kolbenanordnung 23 den Schubschild 26 nicht vor die geschlossene Rückwandklappe 25 fahren kann. Wenn nämlich die Pumpe 60 über das Zweiwegeventil 61 durchgeschaltet wird, baut sich zunächst in der Leitung 63 ein geringer Drück auf, der gemäß dem dargestellten Ausführungsbeispiel auf 25 bar steigen muß, ehe über die Schalt- und Sicherheitsventilanordnung 64 die Kolbenringfläche der Kolbenzylinderanordnung 37 beaufschlagt und der Entriegelungsbolzen herausgezogen wird. Bei weiterem Druckanstieg auf 60 bar wird dann durch die der Kolbenzylinderanordnung 32 zugeordnete Schaltung 65 die Klappe hochgeschwenkt, bevor durch Druckanstieg auf 100 bar, die der Mehrfachzylinder-Kolbenanordnung zugeordnete Steuerung 66 zum Ansprechen gebracht werden kann und den Schubschild 26 in Bewegung setzt.

Im Betrieb wird das Fahrzeug durch seine obere Öffnung 67 (Fig. 1) in herkömmlicher Weise beladen. Dabei ist die Rückwandklappe 25 geschlossen und der Schubschild 26 befindet sich in der in Fig. 1 ersichtlichen vorderen Endstellung. Nach dem Beladen des Fahrzeuges wird der Transport durchgeführt. Am Ende des Transportes wird die in Fig. 4 wiedergegebene hydraulische Schaltung entsprechend den vorstehend beschriebenen Differenzdrucken betätigt, so daß zunächst die Verriegelung der Rückwandklappe 28 gelöst, sodann die Klappe aus ihrer in Fig. 1 wiedergegebenen Ausgangsstellung in die strichpunktiert wiedergegebene Endstellung hochgeschwenkt und schließlich der Schubschild 26 mit Hilfe der Mehrfachzylinder-Kolbenanordnung 23 von links nach rechts in der Darstellung der Fig. 1 in Bewegung gesetzt werden kann. Dabei wird die Ladung im Kasten 3 nach hinten über die Schrägfläche 41 herausgedrückt. Das Fahrzeug bewegt sich hierbei nach vorne um eine entsprechend der Entlade- und Fahrgeschwindigkeit dünne Schicht von 10 bis 20 cm Dicke aufzutragen.

**Patentanspruch**

1. Verfahren zum Aufhalden von Schüttgütern, vorzugsweise von Halden- oder Waschbergen mit Hilfe eines Schüttguttransportfahrzeuges, dessen Aufbau aus einem oben offenen Kasten (3) besteht, der eine als schwenkbare Klappe (28) ausgebildete, hintere Abschlußwand und einen in Längsrichtung (51) des Kastens (3) laufenden Schubschild (26) mit einem Antrieb (23) aufweist, der sich in einem mit dem Kasten (3) an der Schubschildseite angebrachten Rahmen (16) abstützt, wobei das antransportierte Schüttgut beim Entladen des Fahrzeuges abgelagert wird, und das Schüttgut hinter dem fahrenden Schüttguttransportfahrzeug durch Abstimmung der Fahrgeschwindigkeit auf die Entladungsgeschwindigkeit des Schubschildes (26) in bestimmter Lage auf die Oberseite der Halde aufgetragen wird, dadurch gekennzeichnet, daß das Schüttgut in dünner Lage von 10 bis 20 cm aufgetragen, und die so geschaffene Schüttgutfläche durch Befahren ohne Einsatz von Planierraupen verdichtet wird.

3

# 0 065 249

**Claim**

1. A method of forming a dump of bulk material, preferably deads or washery refuse, with the aid of a bulk material transport vehicle having a structure comprising an open-topped container (3) having a rear end wall in the form of a hinged tailboard (28) and a pusher plate (26) running in the longitudinal direction (51) of the container (3) with a drive (23) which is supported by a frame (16) mounted on the container (3) at the side of the pusher plate, whereby the transported bulk material is deposited when the vehicle is unloaded, and the bulk material is laid in a specific layer on the top of the dump behind the moving bulk material transport vehicle by adjusting the speed of movement to the speed of unloading of the pusher plate (26), characterised in that the bulk material is deposited in a thin layer having a thickness of 10 to 20 cm, and the surface of the bulk material so formed is compacted by being run over without the operation of bulldozers.

**Revendication**

1. Procédé pour décharger des matières en vrac, notamment pour constituer des remblais repris au terril ou des stériles du lavage, au moyen d'un véhicule prévu pour transporter les matières en vrac, et comportant à cet effet un caisson (3) ouvert vers le haut ; le caisson étant équipé sur sa face arrière d'un volet d'obturation articulé (28), et comportant, pour manoeuvrer une plaque de poussée (26) mobile dans le sens de la longueur (51) du caisson, un organe de refoulement (23) monté dans un châssis (16) solidaire du caisson (3) et disposé sur celui-ci, du côté où se trouve la plague de poussée (26) ; le procédé consistant à déposer sur le sol les matières en vrac déchargées du véhicule, en réglant la vitesse d'avance du véhicule et la vitesse de refoulement de la plaque de poussée (26), de manière à constituer une couche d'épaisseur déterminée à la surface du remblai ; le procédé étant caractérisé en ce qu'on dépose les matières en vrac en une couche mince de 10 à 20 cm d'épaisseur, et en ce qu'on assure le compactage de cette couche de matières en vrac en y faisant passer des véhicules, sans intervention d'engins de nivellement à chenilles.

4

_Fig. 1_

*Fig.2*

0 065 249

**10**

**53**

**57**

**26**

**56**

**54**

**51**

**52**

**50**

**Fig. 3**

Fig. 4